Europäisches Patentamt

European Patent Office

Office européen des brevets

(19)

(11) Publication number: **0 081 947**
A1

# EUROPEAN PATENT APPLICATION

(21) Application number: **82306404.3**

(51) Int. Cl.³: **G 01 N 21/64**

(22) Date of filing: **02.12.82**

(30) Priority: **02.12.81 US 326790**

(43) Date of publication of application: **22.06.83** Bulletin **83/25**

(84) Designated Contracting States: **DE FR GB**

(71) Applicant: **EASTMAN KODAK COMPANY, Patent Department 343 State Street, Rochester, New York 14650 (US)**

(72) Inventor: **Haas, Daniel Dillon, 21 Sterling Square, Rochester New York 14616 (US)**

(74) Representative: **Pepper, John Herbert et al, KODAK LIMITED Patent Department P.O. Box 114 190 High Holborn, London WC1V 7EA (GB)**

(54) Method and apparatus for normalizing radiometric measurements.

(57) This disclosure relates to a method and apparatus for measuring analyte concentration wherein radiometric readings are corrected for variations in the intensity of the illuminating radiation. The radiometer (40) and method provide for simultaneously illuminating both a target in the form of a test element (S) and a target in the form of a reference material (126), and for sequentially detecting radiation from the targets (S, 126). To provide for the detection of derived radiation from both of the targets (S, 126) generated as a result of the simultaneous illumination, one of the targets (S, 126) produces time-delayed derived radiation having an intensity that is a function of the intensity of the radiation used to simultaneously illuminate the targets (S, 126).

-1-

## METHOD AND APPARATUS FOR
## NORMALIZING RADIOMETRIC MEASUREMENTS

This invention relates to a radiometer and a method for measuring radiation from a test element used in chemical analyses. More specifically, the invention relates to a method and apparatus for correcting for deviations in the intensity of a source of illuminating radiation in a radiometer.

Attempts have been made in the prior art to normalize radiometer readings, that is, to correct for variations in intensity of the light source used to illuminate an element being analyzed, for example a test element for use in chemical analyses. One approach has been to use one detector to monitor the light source and another detector to observe the test element. The risk in such a system is that the two detectors may not give precisely the same response for a given intensity in the light source.

Another approach has been to alternately switch a detector from viewing the test element to viewing the light source or a reference illuminated by the light source, as disclosed, for example, in US-A- 4,153,369. The difficulty with this approach is that the energy output of the light source can vary from one instant to another. Using a second light source as a reference, still another approach, is even less desirable, since a second light source introduces the possibility of drift between the outputs of the two sources.

In systems having other inherent biases and errors that exceed the error caused by variation in illuminating radiation, the necessisty for normalization may not be great. As a result, some systems have tolerated drifts in intensity of the illuminating light source that exceed 1%, and even 2%, of the nominal value. This is true particularly for detectors used for low-light levels. However, recent advances in assays for biological analytes have required the development of radiometers that are more accurate. More specifically, what is needed are radiometers that are capable of adequately compensating for drift in either the illuminating radiation or in the detector output. Most preferably, radiometers should correct the detected signal to have less than 1.0% drift.

It is an object of the present invention to overcome the aforementioned problems of the prior art by providing a radiometer and a method of measurement which normalize the readings of a test element to correct for deviations in the emissions of the radiation source.

In accordance with the present invention, there is provided a radiometer for the measurement of derived radiation generated by a target in the form of a test element, said radiometer comprising a source for emitting illuminating radiation, a target in the form of reference means for generating derived radiation, detector means for detecting amounts of received radiation, and radiation guide means for directing radiation from said source to said test element and to said reference means and for directing derived radiation from said test element and from said reference means to said detector means characterized in that one of said targets has a composition that generates time-delayed derived radiation in response to said illuminating radiation and the other of said targets generates derived radiation, said radiation guide means is adapted to substantially simultaneously illuminate said test element and said reference means and sequentially direct to said detector means: (1) derived radiation generated by said other target, and (2) time-delayed derived radiation generated by said one target in response to said illumination.

In accordance with the present invention, there is also provided a method for normalizing measurements of radiation in a radiometer, said radiometer comprising a first target containing an analyte and a second target, the method comprising the steps of substantially simultaneously illuminating said targets with radiation from a single source to generate derived radiation from one of said targets and time-delayed derived radiation from the other target; sequentially detecting derived radiation from said one target and time-delayed derived radiation from the other target and producing signals representing respectively said derived radiations; and adjusting the signal representing radiation detected from the first target by means of the signal representing radiation detected from the second target.

An advantage of the present invention is that the radiation source is effectively monitored for deviations existing as of the time when they affect the radiation detected from the test element. Further, such monitoring can be done by the same detector that is used to detect the radiation received from the test element, thereby avoiding the problems created by using different detectors. Another advantage of the invention is that detection of time-delayed derived radiation from the test element occurs only when the detector is optically isolated from radiation coming from the radiation source.

Embodiments of the present invention will now be described, by way of example, with reference to the accompanying drawings in which:

Fig. 1 is a schematic plan view of a radiometer constructed in accordance with the present invention;

Fig. 2 is a fragmentary schematic plan view similar to a portion of Fig. 1, but illustrating a second phase of the operation of the radiometer;

Fig. 3 is a plan view of a preferred chopper blade used in the radiometer;

Fig. 4a is a graph of the intensity of the illuminating radiation versus time and Fig. 4b is a graph of the intensity of the reference luminescence versus time;

Figs. 5a and 5b are graphs similar to Figs. 4a and 4b respectively, but showing a different embodiment;

Fig. 6 is a schematic view of an alternative embodiment, illustrating a first operative phase;

Fig. 7 is a schematic view of the embodiment shown in Fig. 6, showing a second phase of its operation;

Figs. 8 and 9 are schematic views similar to those of Figs. 6 and 7, but illustrating another embodiment;

Figs. 10 and 11 are schematic views illustrating yet another embodiment;

Fig. 12 is an isometric view of an alternative embodiment wherein reflected radiation from the test element is detected; and

Fig. 13 is a schematic view of another embodiment of the present invention.

"Derived radiation" as used herein refers to radiation that is generated in response to illumination by some radiation source. "Time-delayed derived radiation" as used herein refers to radiation occurring at an instant of time, that is detectable, later than the instant of time when the material that produces the radiation is illuminated. Examples of time-delayed derived radiation are reflected radiation along a relatively long optical path, and phosphorescent luminescence. "Luminescence" is used to refer to emitted radiation as distinguished from reflected radiation. "Fluorescent luminescence" is used herein to refer to essentially instantaneous luminescence, as distinguished from "phosphorescent luminescence" which is time-delayed, regardless of any quantum mechanical relations between the energy levels involved. "Instantaneous radiation" is used to refer to radiation that is coincident with the instant of illumination by the source, and, as will be apparent, "instantaneous derived radiation" is reflected or transmitted radiation from either a reference or an element being analyzed. Useful embodiments of the present invention include detection of both fluorescence and phosphorescence.

The present invention is based on the discovery that a radiometer can detect derived radiation generated by two targets, that is the test element and the reference means, in a manner such that the intensities of both of the derived radiations are a function of the intensity of the illuminating radiation that was emitted during one single period of time. This is achieved by simultaneously illuminating both of the targets and sequentially detecting derived radiation from the reference and the test element, at least one of these derived radiations being time-delayed. However, the time-delayed radiation is a function of the illuminating radiation intensity of that single time period. The sequential detecting step is either actively controlled by the optical means, or results from the position and composition of the optical means.

The radiation source that generates the illuminating radiation is preferably a light source. In addition, sources operating in other portions of the electromagnetic spectrum are also useful, such as sources of X-rays. Also, particle sources may find utility, such as electron beams and nuclear radiation.

As will become apparent, the radiometer of the present invention is particularly useful in compensating for drift so that the radiation detected from the test element is corrected to have less than 1.0% drift. However, the radiometer of this invention is useful even if the "drift" resulting from the normalization procedure herein provided exceeds this value.

Test elements useful with the present invention have a variety of configurations and compositions that permit analyte measurement by a radiometer. Preferred compositions utilize conventional fluors or colorimetric indicators. Useful test elements include those adapted for "wet analysis," that is cuvettes containing a liquid which is analyzed by optical transmission. Preferably, however, the test element is one in which one or more porous layers are coated on a support, at least one of the layers containing an indicator reagent. The porous layer of such an element is adapted to be contacted by a liquid. In one embodiment, the reagent bears a europium label and moves with respect to a detectable region of the test element when a liquid containing an analyte is spotted onto the layer. The amount of labeled reagent which moves is proportional to the amount of unknown analyte. Examples of such test elements are described in Research Disclosure, Vol. 161, Publication 16169, pp. 70, 72, (September, 1977), published by Industrial Opportunities Ltd., Homewell, Havant, Hampshire, PO9 1EF, United Kingdom, wherein the elements are described for use, for example, in the immunoassay of blood serum. The reagent generates time-delayed red radiation in response to exposure to light of an appropriate wavelength.

Still other useful test elements are those in which instantaneous derived radiation is detectable. Preferred forms are those in which a colorimetric change is detectable from an indicator, using reflected light. Patents disclosing such elements include US-A- 3,992,158 and US-A- Re 30,267. US-A- 4,169,751, discloses useful test element structure for supporting such chemistries. In addition, test elements that emit fluorescence as the instantaneous derived radiation are also useful. Yet other analytes that can be measured by the invention include those present in solids, such as phosphorescent molecules in a plastic or glass.

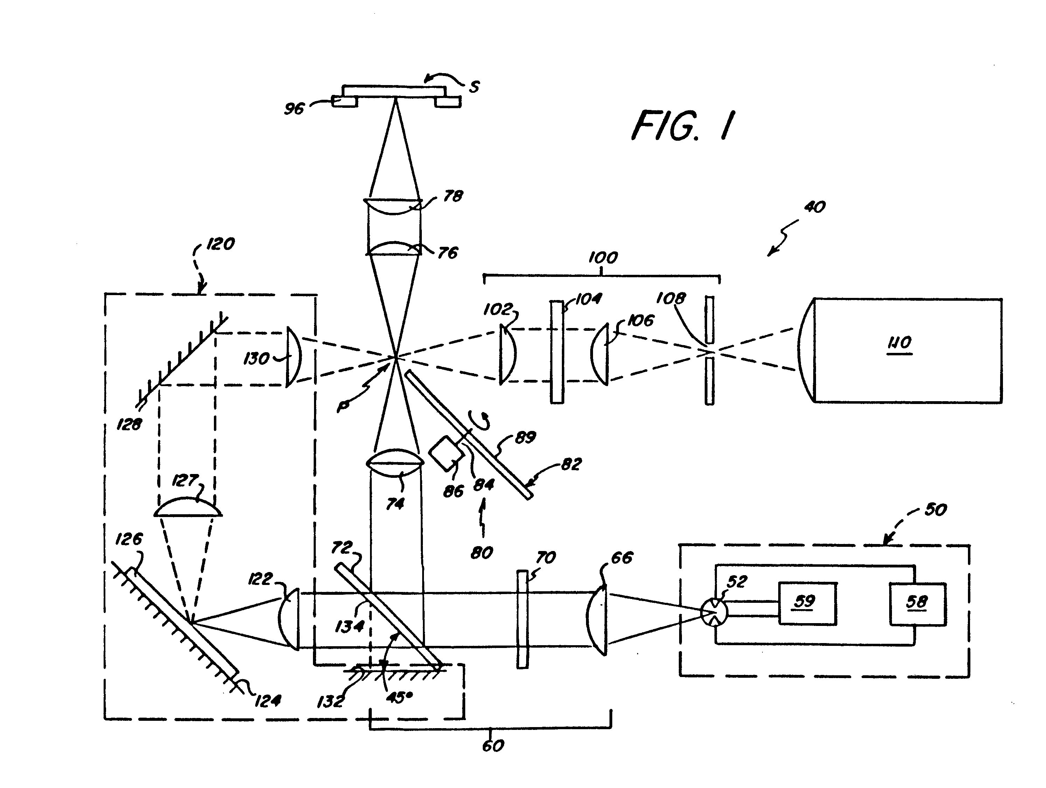

In accordance with one aspect of the present invention, a radiometer 40 (Fig. 1) is constructed to alternately permit and preclude exposure of a test element S to a radiation source 50. The radiometer 40 is also adapted to alternately preclude and permit the passage of radiation from a reference 120 to a detector 110. In the present embodiment, time-delayed luminescence is emitted by the test element S, while the reference 120 may emit instantaneous luminescence, time-delayed luminescence, or a combination of both instantaneous and time-delayed luminescence. Radiometer 40 further comprises a first radiation guide means 60 which includes a chopper means 80, a test element support 96, and second radiation guide means 100; mounting frames (not shown) for each of these elements are of a conventional type. Further, it will be understood that the elements are housed in a light-tight housing (not shown).

Radiation source 50 preferably comprises a lamp 52 of conventional design that is either continuously illuminated or of the pulsed type. Lamp 52 is preferably a 1000 volt 7.5 Joule xenon arc lamp powered by a capacitor 58, such as a 15 microfarad capacitor, and fired by a conventional trigger circuit 59 in response to a signal from a covential power source (not shown). As is conventional, lamp 52 preferably has spectral-emission lines that are generally coincident with the excitation wavelength of the fluor to be detected in the test element S.

Radiation guide means 60 includes a lens 66 and filter 70 (Fig. 1). Lens 66 is preferably a planoconvex lens. For this embodiment, lens 66 preferably has a focal length of about 50 mm. Filter 70 is preferably a Corning 9863 filter that passes only radiation of wavelengths between about 240 and 420 mm and some infrared radiation.

To direct the illuminating radiation simultaneously onto the test element S and a reference material 126 in reference 120, a predominantly reflective beam splitter 72 is disposed at a 45° angle to the radiation transmitted by filter 70. A lens 74, which is a biconvex lens with, for example, a 25 mm focal length, and planoconvex lenses 76 and 78, are interposed between the beam splitter 72 and the test element S on support 96. Alternatively, two separate radiation guide means (not shown) can be used instead of beam splitter 72.

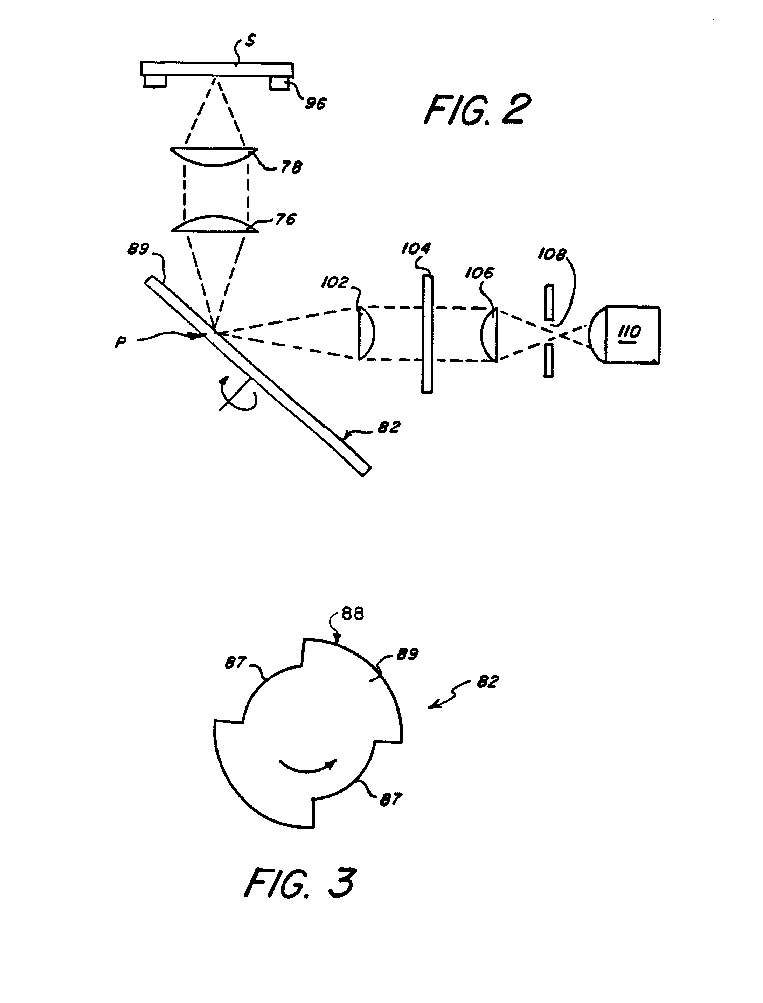

Chopper means 80 comprises a chopper blade 82, a drive shaft 84 (Fig. 1), a drive motor 86, and a conventional phase lock control loop (not shown). Preferably, blade 82 is constructed with opaque portions 88 and with transmissive portions 87, shown as cut-out portions in Fig. 3. "Opaque" as used herein means the ability to obstruct or block rather than transmit the wavelengths of the radiation in question. The exact shape of transmissive portions 87 is not critical, and the portions 87 can be filled with a transparent material (not shown) such as a plastic that transmits the illuminating radiation. A surface 89 (Fig. 3) of the blade 82 is preferably a mirrored surface; as viewed in Fig. 1, surface 89 is located opposite lens 76 and a lens 102 in guide means 100. To ensure detection of sufficient portions of the time-delayed radiation, motor 86 preferably is a high-speed synchronous motor having a rotation rate of between about 6000 and 8000 revolutions per minute. The above-noted phase-lock control loop (not shown) regulates the speed to that desired.

Radiation that passes through point P (Fig. 1), while the portions 87 of the chopper blade 82 are aligned therewith, proceeds to a test element S on test element support 96.

Radiation guide means 100 comprises lens 102 which directs radiation reflected from surface 89 on blade 82 through a filter 104 to a lens 106. Filter 104 is preferably an interference filter having a wavelength of 616.9 nm and a 14 nm bandwidth; filter 104 is used to exclude extraneous radiation, such as luminescence from components of the test element S that are not of interest, e.g., plastic supports and the like. Filter 104 also excludes most of the illuminating radiation that might be reflected from a mirrored support 124, described hereinafter.

Radiation transmitted by lens 106 is directed through aperture 108 to the detector 110. Although detector 110 is hereinafter described as a photodetector for the detection of light radiation, any detector sensitive to the generated radiation is useful. Preferably aperture 108 is about 0.94 cm in diameter, and photodetector 110 is a conventional photomultiplier tube, for example a Type 31000B tube manufactured by RCA. Detector 110 preferably is shielded by means (not shown) from light other than that transmitted via lens 102 and 106.

In accordance with one aspect of the invention, detector 110 is adapted to detect variations in the intensity of radiation source 50, and thus to normalize the readings taken from the test element S. The normalized reading, corresponding to a normalized signal generated by the radiometer 40, as hereinafter discussed, preferably is the ratio of the integrated derived radiation intensity detected from the test element S, to the integrated derived radiation intensity detected from the reference 120.

As illustrated in Fig. 1, reference 120 comprises a lens 122 which directs light from beam splitter 72 to a mirrored support 124. Support 124 is adapted to receive a reference material 126 which is highly luminescent, preferably in coated form, and is adapted to generate either instantaneous or time-delayed derived radiation, or both, in response to the level of intensity of source 50. It is not necessary that reference material 126 be present if instantaneous derived radiation is desired as a standard; the mirrored surface 124 can be used without material 126. However, use of reference material 126 is advantageous in that it assists in the attenuation of radiation source 50, thereby making the signal from support 124 more nearly correspond to the signal from element S. Useful instantaneous derived radiation includes illumination reflected from a reference material 126 which is colored and of a known reflection density.

Most preferably, material 126 comprises a luminescent material having a predetermined peak wavelength of emission, such as an organic europium chelate imbibed in latex particles absorbed into a porous matrix of plastic beads. This europium chelate is particularly advantageous when the spectral constitution of radiation from the test element S occurs in the same portion of the spectrum as the radiation from the europium chelate which fluoresces and phosphoresces primarily in the red wavelengths. Material 126 can be in the form of beads (not shown) which have diameters of between about 10 microns and about 20 microns, and material 126 is applied to form a thickness of about 100 microns. The imbibition of the chelate into the latex is preferably achieved by the process of US-A-4,283,382.

A lens 127 and a mirror 128 serve to direct and guide radiation from the reference material 126 through a lens 130 and into radiation guide means 100 when chopper blade 82 is oriented to pass such radiation; that is, when transmissive portions 87 (see Fig. 3) of the chopper blade 82 occupy point P, as shown in Fig. 1.

Optionally, a mirror 132 can be added immediately below beam splitter 72 to re-direct radiation as follows: Some emission of material 126 can be collected by lens 122 and directed back to a back side 134 of beam splitter 72 where it is reflected downwardly. Mirror 132 then reflects such light back against back side 134; from back side 134, light passes through lens 122, and support 124 directs it onward to mirror 128 to be detected.

Reference material 126 can be formed of certain compositions which generate phosphorescence as well as fluorescence. In such cases, after the first instant of illumination of material 126, the radiation detected from the material 126 by detector 110 includes phosphorescence as well as fluorescence. Such detection of phosphorescence is advantageous because it permits integration of the radiation during a longer period of time in order to obtain better precision than would be obtained only with the detection of a fluorescent spike. The integration is achieved, for example, through the use of an operational-amplifier integrator (not shown) and a 0.01 microfarad feedback capacitor (not shown) that receive the signal from a preamplifier (not shown) of the detector 110.

-13-

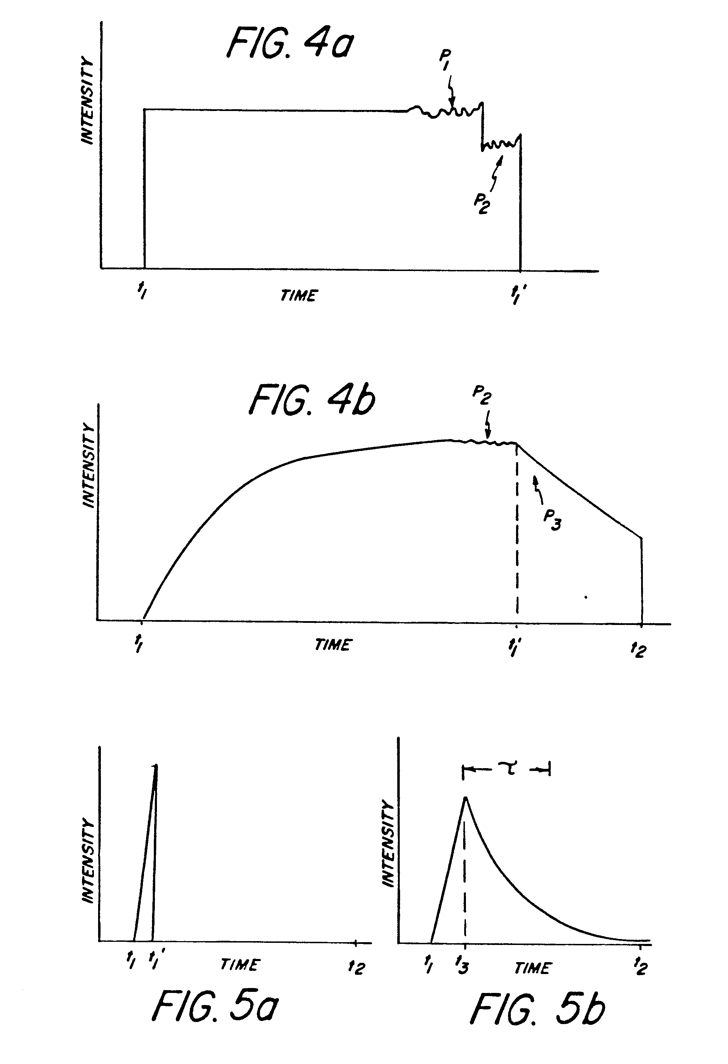

The first phase of the operation of radiometer 40 will be readily apparent from the preceding description. The operation is further illustrated, as follows: If the illuminating radiation received by reference material 126 has the intensity curve as is shown in Fig. 4a, then the luminescence detectable by detector 110 is that shown in Fig. 4b. A time $t_1$ represents the time at which lamp 52 turns on, transmissive portion 87 being positioned to allow radiation to pass through point P. A time $t_1'$ represents the time when lamp 52 turns off, and a time $t_2$ the time when transmissive portion 87 is replaced by an opaque portion 88 at point P. Where a significant portion of the luminescence from reference material 126 is phosphorescence, the additive effects of the deviations in the lamp's output that occur during a period $P_1$ and a period $P_2$ (Fig. 4a) may not be detectable until period $P_2$ and a period $P_3$, respectively (Fig. 4b). However, as explained hereafter, even deviations in period $P_3$ are detectable.

A useful, and most preferred, embodiment is one in which lamp 52 is a pulsed lamp that produces an intensity curve such as the curve of Fig. 5a. For this embodiment, the pulse preferably commences at time $t_1$. The luminescence detected from reference material 126 is then primarily or totally phosphorescence (Fig. 5b). The ratio $(t_2-t_1)/\tau$ is not critical, where $\tau$ (tau) is the half-life of the phosphorescence, although best results occur for larger ratios as they ensure the greatest precision. For similar reasons, $t_2$ preferably comes considerably after a time $t_3$, the time of peak luminescence. Preferably the lamp 52 is on for 20 microseconds, and the phosphorescent material of reference material 126 has a half-life $\tau$ that is about equal to the half-life $\tau$ of the phosphorescent material of the test element S. The ratio $[(t_2-t_1)/\tau]$ of the reference material is preferably greater than or equal to 0.2; $\tau$ for the reference material 126 is preferably about 700 microseconds, and the duration of detection time of the phosphorescence from test element S is about 2000 microseconds.

Whether the illuminating radiation follows the intensity curve of Fig. 4a or Fig. 5a, the integrator (not shown) noted above preferably is turned on at time $t_1$ and remains on until shortly before time $t_2$, the time at which the chopper 80 begins to preclude reception by the detector 110 of luminescence from reference material 126. By this arrangement, variations in period $P_3$ (Fig. 4b) are detected.

Alternatively, if the integrator (not shown) is turned on after time $t_1'$, as in another useful embodiment, only time-delayed derived radiation will be recorded from the reference material 126.

During the passage of time from $t_1$ to $t_2$, chopper blade 82 precludes the passage of radiation from element S to detector 110 by being transmissive to, rather than reflective of, any such radiation as might be reflected or emitted from element S. Thus, only the radiation from reference material 126 is detected by detector 110 at this phase of the operation. The beam splitter 72 acts to attenuate the intensity of any illuminating radiation that might reflect via mirrors 124 and 128 to the detector 110. Such unwanted reflected illuminating radiation would tend to interfere with the desired signal representing the luminescence of the reference material 126. Furthermore, as noted, filter 104 is preferably selected to exclude most of the wavelengths of the lamp 52 and to pass only radiation from the reference 120 and the test element S.

After transmissive portion 87 rotates past point P (Fig. 1) the opaque portion 88 of the blade 82 passes through point P to preclude the passage of light from lamp 52 to test element S and the passage of radiation from the reference material 126 to the detector 110. At this point, mirrored surface 89 is effective, however, to pass, by reflection, any phosphorescent radiation or other time-delayed radiation from test element S to detector 110. Because illuminating radiation is precluded by chopper blade 82 from reaching test element S at this time, it is also precluded from reaching the detector 110 (such as by reflection from the test element). Such isolation of the test element S from the illuminating radiation during detection is useful because photons of irregular intensity at this phase in the operation, if allowed to reach the test element S, could incrementally affect the detected output of the test element S, without a compensating correction.

The luminescence detected from test element S has an intensity curve similar to that portion of Fig. 5b between time $t_3$ and time $t_2$, that is, a decay curve only. For best precision, the ratio $(t_2-t_3)/\tau$ for such a decay curve is preferably large.

The reading obtained by detector 110 of the phosphorescence from test element S is converted through the use of a conventional data processor (not shown) into a measurement of the concentration of a selected analyte. For example, a separate integrator (not shown) for the test element is useful for receiving a gated signal from detector 110, the gating being timed to coincide with the phases of blade 82 and thus with the radiation being received from the test element S. The integrator (not shown) generates an output that represents the integrated derived radiation intensity received from the test element S. The integrator (not shown) used for the signal from reference 120 generates an output that represents the integrated derived radiation intensity received from reference material 126. The two outputs are fed to a conventional analog arithmetical division integrated circuit (not shown) to provide a ratio of the two outputs. It is this ratio that represents the normalized signal. The integrators (not shown) preferably are adjusted so as to be inoperative during the transition periods when transmissive portion 87 begins to pass into or out of the vicinity of the beams of radiation at point P. Once the normalized signal is obtained, it is converted to a particular concentration of analyte using conventional calibration equations.

As will be apparent, the advantages of radiometer 40 are that it normalizes the concentrations by correcting for actual light source deviations as they occur, using a single detector, detector 110, and a single radiation source, radiation source 50, for measuring radiation from both the reference 120 and the test element S. Preferably, only a single chopper 80 is used, eliminating the need for synchronization which would be necessary if more than one chopper was used.

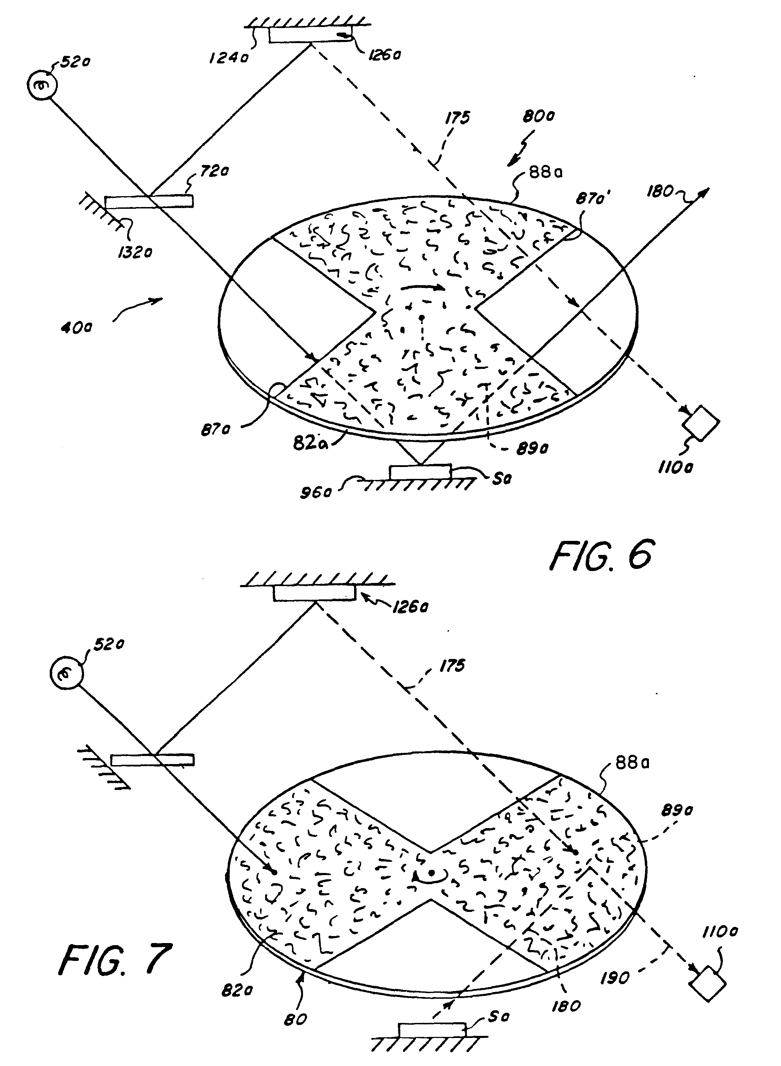

Figs. 6 and 7 illustrate an alternative embodiment of the present invention. Parts similar to those shown in the previous embodiment bear the same reference numeral to which the distinguishing suffix "a" is appended. All mirrored surfaces are again shown, but certain elements which are generally the same as in the previous embodiment have been omitted.

As shown in Fig. 6, a radiometer 40a comprises a lamp 52a which provides illuminating radiation, a beam splitter 72a that is more transmissive than reflective (to permit more light to reach the test element Sa), a support 96a for the test element Sa, a reference material 126a on a mirrored support 124a, a chopper 80a, and a detector 110a. Chopper 80a comprises a blade 82a which has two transmissive portions 87a and 87a', and an opaque portion 88a having a mirrored surface 89a which faces detector 110a. The chopper blade 82a is rotated by a motor (not shown). Illuminating radiation from beam splitter 72a simultaneously illuminates both test element Sa and reference material 126a. Material 126a emits fluorescence and/or phosphorescence, as shown by dashed arrowed line 175, that is detected through transmissive portion 87a' by detector 110a. A mirror 132a re-directs stray reference luminescence, as in the previous embodiment, to the detector 110a. Any reflectance of radiation from element Sa at this stage is precluded from reaching the photodetector, as indicated by arrowed line 180.

When chopper blade 82a rotates to the position shown in Fig. 7, the opaque portion 88a of blade 82a precludes radiation directed to element Sa. The opaque portion 88a also blocks the detection of radiation (line 175) emitted by reference material 126a. However, mirrored surface 89a reflects the phosphorescent radiation from element Sa to detector 110a, as indicated by dashed arrowed lines 180 and 190.

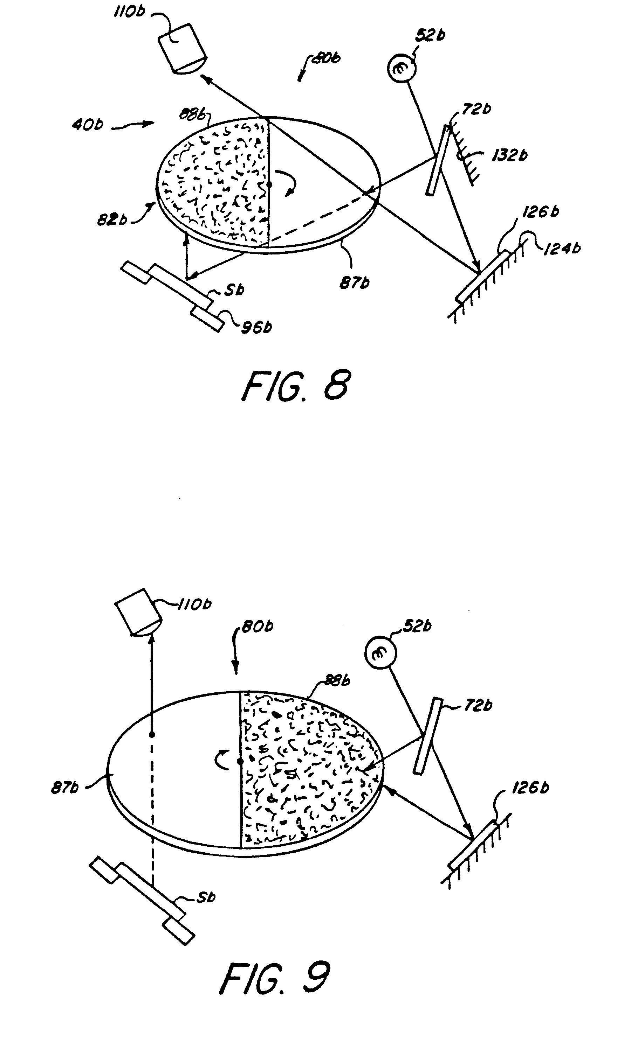

Another embodiment of the present invention is shown in Figs. 8 and 9. Parts similar to those previously described bear the same reference numeral to which the distinguishing suffix "b" is appended. All mirrored surfaces are illustrated, but certain elements previously described have been omitted. In Fig. 8, there is shown a radiometer 40b which comprises a lamp 52b, a beam splitter 72b, a mirror 132b, a surface 96b for test element Sb, a reference material 126b on a mirrored support 124b, a chopper 80b and a detector 110b. As in the previously described embodiments, illuminating radiation is simultaneously directed along the indicated paths to both reference material 126b and element Sb, radiation to the latter being through a transmissive portion 87b of chopper blade 82b. As shown in Fig. 8, luminescence from reference material 126b is passed through the chopper 80b to detector 110b, but radiation from element Sb is blocked. In Fig. 9, chopper blade 82b is shown in a position to preclude detection of all illuminating radiation and luminescence from reference material 126b; in this position, the chopper blade 82b permits phosphorescence from element Sb to pass through portion 87b to detector 110b.

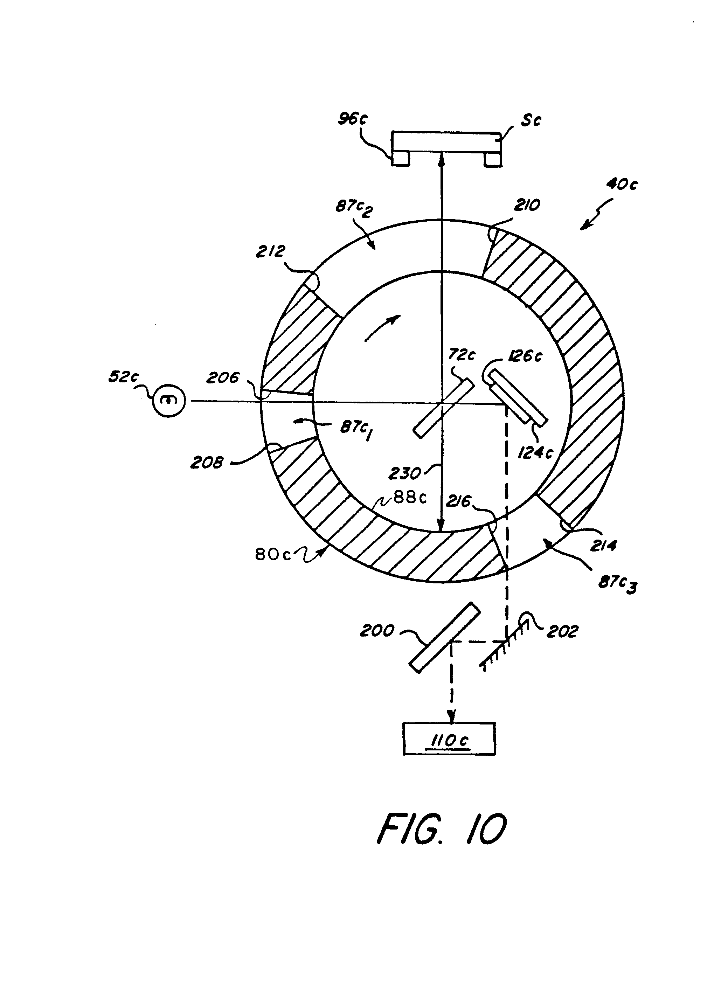

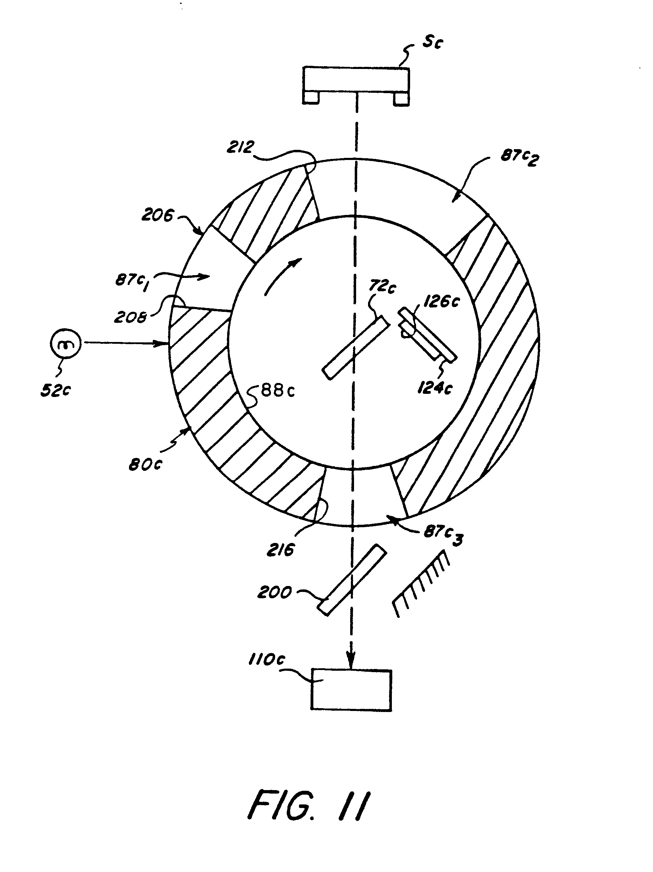

Another embodiment of the present invention is shown in Figs. 10 and 11. Parts similar to those previously described bear the same reference numeral to which the distinguishing suffix "c" is appended.

Certain elements have been omitted for clarity. In Fig. 10, there is shown a radiometer 40c which comprises a lamp 52c, a beam splitter 72c, a support 96c for a test element Sc, a reference material 126c on a mirrored support 124c, and a detector 110c. Radiometer 40c also comprises a second beam splitter 200 and a mirror 202. Chopper 80c is cylindrical and is adapted to rotate about an axis (not shown) that is located generally along a center portion of beam splitter 72c and perpendicular to the path of illuminating radiation from lamp 52c. Transmissive portions $87c_1$, $87c_2$, and $87c_3$ are provided in the chopper 80c. Radiation is transmitted through portion $87c_1$ to provide simultaneous illumination of element Sc and reference material 126c; portion $87c_1$ has a leading edge 206 and a trailing edge 208. Portion $87c_2$ is larger than portion $87c_1$ and is defined by a leading edge 210 and a trailing edge 212. Finally, portion $87c_3$ is generally the same size as portion $87c_1$ and has a leading edge 216 and a trailing edge 214.

When chopper 80c is positioned as shown in Fig. 10, illuminating radiation is permitted to pass simultaneously, as shown in solid lines, to both element Sc and reference material 126c due to the positioning of chopper transmissive portions $87c_1$ and $87c_2$. Reflected radiation from test element Sc (arrow 230) is intercepted by the opaque portion 88c of the chopper 80c. Luminescence emitted by the reference 126c is directed, as shown by the dashed arrow, to detector 110c. After the chopper 80c has rotated, to the position shown in Fig. 11, radiation from lamp 52c is blocked. The location and size of transmissive portions $87c_2$ and $87c_3$ permit

phosphorescence from test element Sc to pass through beam splitters 72c and 200 and to detector 110c.

Alternatively, and particularly for a test element Sc that generates mostly phosphorescence and very little fluorescence, the portion of chopper 80c between edges 208 and 216 is apertured (not shown) so that lamp 52c is not precluded from illuminating the test element S while time-delayed radiation is being detected therefrom. However, such an embodiment is not the most preferred. If lamp 52c is not blocked by the portion 88c, test element Sc could generate some "spurious" detectable luminescence which would not be accounted for by the derived radiation from reference 126c used to normalize the signal from test element Sc.

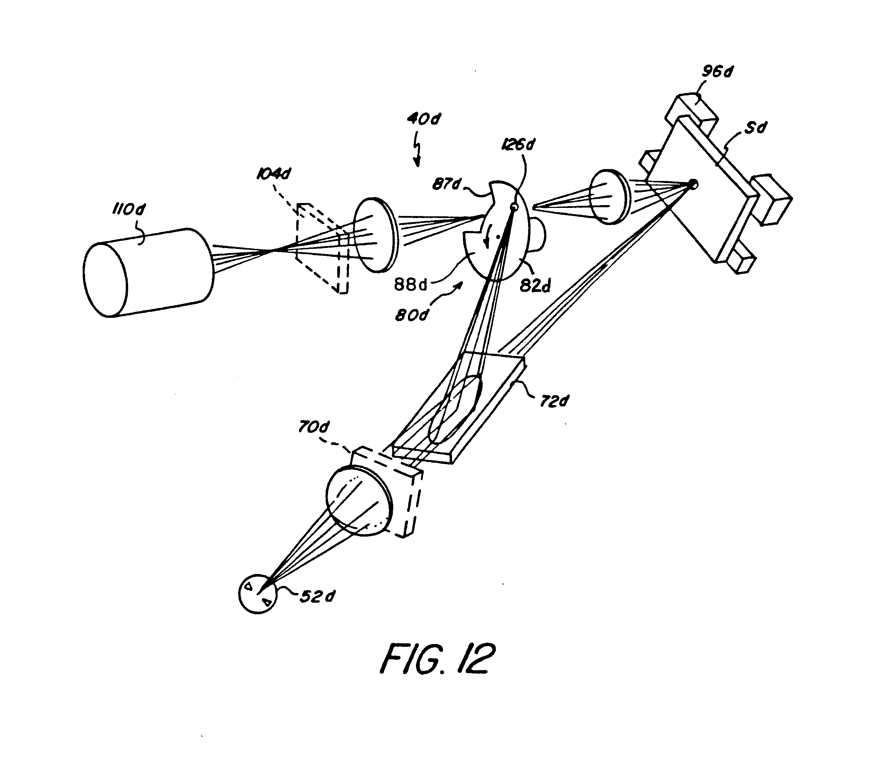

The present invention is operative also to detect instantaneous derived radiation from a test element S, if the positions of the reference material 126 and test element S are exchanged in any of the previously described embodiments and the reference material 126 is of a type which emits time-delayed luminescence. Instantaneous derived radiation from a test element S is also detectable using a further embodiment, shown in Fig. 12. Referring to Fig. 12, parts similar to those previously described bear the same reference numeral to which the distinguishing suffix "d" is appended. Thus, a radiometer 40d comprises a lamp 52d, which is continuously radiating or is pulsed, a beam splitter 72d, support 96d for test element Sd, chopper 80d and detector 110d. Chopper 80d has a blade 82d which is disposed to alternately preclude and pass radiation reflected from test element Sd to detector 110d, and reference material 126d is disposed on opaque portion 88d of the chopper blade 82d. Chopper 80d serves to first permit reflected radiation from element Sd to pass through a transmissive portion 87d to detector 110d. During this phase, there is no detection of radiation from reference material 126d because it is out of optical alignment with the detector 110d; however, during this phase, reference material 126d receives illuminating radiation from beam splitter 72d (Fig. 12). In a subsequent operating phase (not shown), the chopper blade 82d rotates so that opaque portion 88d precludes the passage of radiation from test element Sd to the detector 110d; in this position, reference material 126d is optically aligned to deliver phosphorescence to the detector 110d.

Optional filters 70d and 104d are shown in phantom (Fig. 12), the latter being particularly useful if fluorescence rather than reflectance is to be detected from test elements Sd.

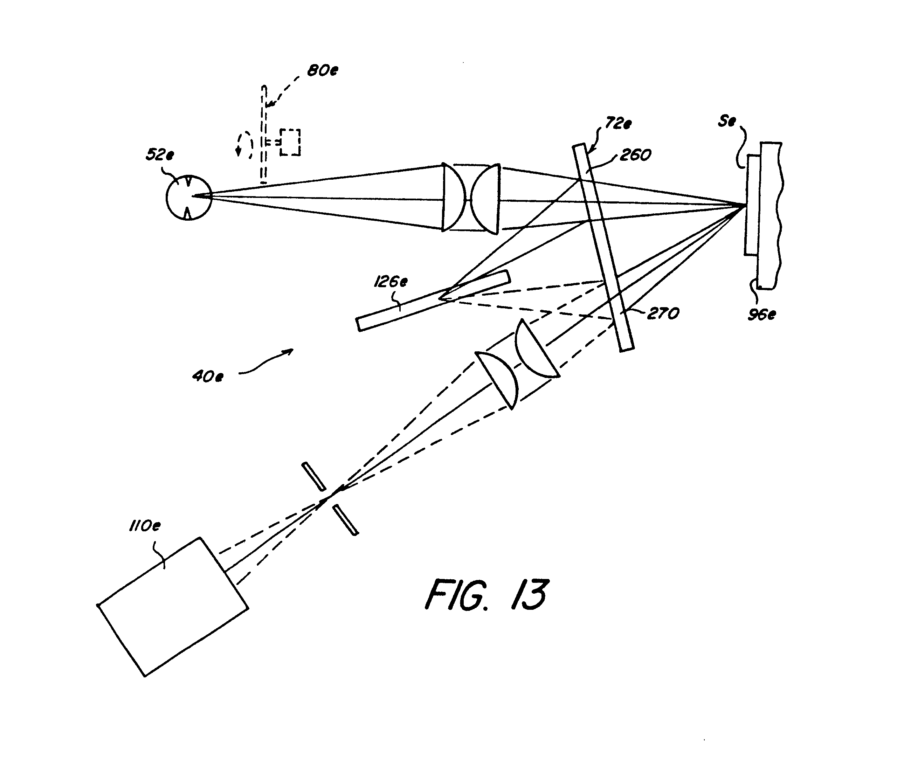

Another embodiment of the invention is shown in Fig. 13. Parts similar to those previously described bear the same reference numeral to which the distinguishing suffix "e" has been appended. With reference to Fig. 13, a radiometer 40e comprises a lamp 52e, a beam splitter 72e, a reference material 126e, a support 96e for a test element Se, and a detector 110e. A chopper 80e, shown in phantom, is optional and can be eliminated if lamp 52e is pulsed. Beam splitter 72e has two portions--an incoming portion 260 that receives illuminating radiation, and an outgoing portion 270 that receives reflected or emitted radiation. This embodiment operates by detecting radiation reflected from element Se simultaneously with the illumination of both test element Se and reference material 126e by lamp 52e. Reference material 126e preferably emits a negligible amount of radiation until some perceptible time after illumination. As an example, mercury gas is useful for such reference material. Thereafter, either chopper 80e precludes illuminating radiation from being received from lamp 52e, or the lamp is shut off to preclude detection of illuminating radiation; either alternative is equivalent for purposes of this invention. Termination of illumination occurs before the reference material 126e begins to emit a substantial amount of time-delayed luminescence. At this phase in the operation, phosphorescence from reference material 126e is directed to portion 270 of beam splitter 72e which directs the radiation to detector 110e, as shown by the dashed lines in Fig. 13. Preferably, the illuminating radiation is not allowed to again illuminate the reference material 126e or test element Se until after the time-delayed radiation of reference material 126e has decayed to negligible values.

Minor amounts of phosphorescence can be received from test element Se while the reference radiation is being detected, so long as such amounts are so small, compared to the time-delayed radiation from reference material 126e, as to negligibly affect the normalization correction. When lamp 52e is of the pulsed type, this embodiment permits acquisition of normalized signals in a device having no moving parts.

Yet another alternative to the embodiment of Fig. 13 is to replace reference material 126e with a very long strand of optical fiber (not shown). One end of this fiber is aligned to receive the illuminating radiation from portion 260 of the beam splitter. The other end is aligned to direct that radiation, transmitted through or reflected along the length of the fiber, back to portion 270 of the beam splitter 72e and thence to the detector 110e. By arranging for the optical fiber to be at least 3000 m long, a sufficient time delay of 10 microseconds is created. Subsequent to this delay, further illumination of the test element and reference means is precluded by closing the chopper 80e or by turning off the lamp 52e. Such elimination of the illuminating radiation leaves only the radiation passing through the length of the optical fiber to be detected as time-delayed derived radiation.

CLAIMS

1. A radiometer for the measurement of derived radiation generated by a target in the form of a test element (S-Se), said radiometer comprising a source (52-52e) for emitting illuminating radiation, a target in the form of reference means (126-126e) for generating derived radiation, detector means (110-110e) for detecting amounts of received radiation, and radiation guide means (60, 80, 100, 80a-80e) for directing radiation from said source (52-52e) to said test element (S-Se) and to said reference means (126-126e) and for directing derived radiation from said test element (S-Se) and from said reference means (126-126e) to said detector means (110-110e) characterized in that one of said targets (S-Se, 126-126e) has a composition that generates time-delayed derived radiation in response to said illuminating radiation and the other of said targets generates derived radiation, said radiation guide means (60, 80, 100, 80a-80e) is adapted to substantially simultaneously illuminate said test element (S-Se) and said reference means (126-126e) and sequentially direct to said detector means (110-110e): (1) derived radiation generated by said other target, and (2) time-delayed derived radiation generated by said one target in response to said illumination.

2. A radiometer according to claim 1, characterized in that said guide means (60, 80, 100, 80a-80e) includes chopper means (80-80e) for intermittently intercepting radiation directed from said source (52-52e), said test element (S-Se), and said reference means (126-126e).

3. A radiometer according to claim 2, characterized in that said chopper means (80-80c) includes one or more opaque portions (88-88c) and one or more transmissive portions (87, 87a, 87a', 87b, $87c_1$-$87c_3$), said opaque portion or portions (88-88c) and said transmissive portion or portions (87, 87a, 87a', 87b, $87c_1$-$87c_3$) being movable and located so that said chopper means (80-80c) alternately precludes passage of radiation from said test element (S-Sc) to said detector means (110-110c) while permitting radiation to pass from said source (52-52c) to said test element (S-Sc) and said reference means (126-126c), and permits radiation to pass to said detector means (110-110c) from said test element (S-Sc).

4. A radiometer according to claim 2, characterized in that said chopper means (80-80c) includes one or more opaque portions (88-88c) and one or more transmissive portions (87, 87a, 87a', 87b, $87c_1$-$87c_3$), said opaque portion or portions (88-88c) and said transmissive portion or portions (87, 87a, 87a', 87b, $87c_1$-$87c_3$) being movable and located so that said chopper means (80-80c) alternately precludes passage of radiation from said test element (S-Sc) to said detector means (110-110c) while permitting radiation to pass from said source (52-52c) to said test element (S-Sc) and said reference means (126-126e), and precludes passage of radiation from said reference means (126-126c) to said detector means (110-110c) while permitting radiation to pass to said detector means (110-110c) from said test element (S-Sc).

5. A radiometer according to claim 2, characterized in that said chopper means (80-80c) includes one or more opaque portions (88-88c) and one or more transmissive portions (87, 87a, 87a', 87b, $87c_1$-$87c_3$), said opaque portion or portions (88-88c) and said transmissive portion or portions (87, 87a, 87a', 87b, $87c_1$-$87c_3$) being movable and located so that said chopper means (80-80c) alternately precludes passage of

0081947

radiation from said test element (S-Sc) to said detector means (110-110c) while permitting radiation to pass from said source (52-52c) to said element and from said reference means (126-126c) to said detector means (110-110c), and permits radiation to pass to said detector means (110-110c) from said test element (S-Sc).

6. A radiometer according to claim 2, characterized in that said chopper means (80-80c) includes one or more opaque portions (88-88c) and one or more transmissive portions (87, 87a, 87a', 87b, $87c_1$-$87c_3$), said opaque portion or portions (88-88c) and said transmissive portion or portions (87, 87a, 87a', 87b, $87c_1$-$87c_3$), being movable and located so that said chopper means (80-80c) alternately precludes passage of radiation from said test element (S-Sc) to said detector means (110-110c) while permitting radiation to pass from said source (52-52c) to said element (S-Sc) and from said reference means (126-126c) to said detector means (110-110c), and precludes passage of radiation from said reference means (126-126c) to said detector means (110-110c) while permitting radiation to pass to said detector means (110-110c) from said test element (S-Sc).

7. A radiometer according to claim 2, characterized in that said chopper means (80d) includes opaque portion (88d) and transmissive portion (87d), said opaque portion (88d) and said transmissive portion (87d) being movable and located so that said chopper means (80d) alternately precludes passage of radiation from said reference means (126d) to said detector means (110d) while permitting radiation to pass from said source (52d) to said test element (Sd) and said reference means (126d), and permits radiation to pass to said detector means (110d) from said reference means (126d).

8. A radiometer according to claim 2 or 7 characterized in that said reference means (126d) is mounted on said chopper means (80d).

9. A radiometer according to any one of claims 3-6, characterized in that said opaque portions (88, 88a) include a radiation-reflective surface (89, 89a).

10. A radiometer according to any one of claims 2-9, characterized in that said chopper means (80-80b, 80d) comprises a chopper blade (82-82b, 82d) which is generally disc-shaped and has one or more transmissive portions (87; 87a; 87a'; 87b; 87d).

11. A radiometer according to any one of claims 3-6, characterized in that said chopper means (80c) comprises an apertured cylinder.

12. A radiometer according to claim 1, characterized in that said guide means includes a rotatable chopper (80d) having an opaque portion (89d) and a transmissive portion (87d), said portions being constructed and located so that, during rotation, said chopper (80d) alternately precludes and permits passage of radiation from said test element (Sd) to said detector means (110d), and wherein said reference means (126d) is located on said chopper (80d) so that, during at least a portion of the rotation of said chopper (80d), said reference means (126d) receives radiation from said source (52d) simultaneously with illumination of said test element (Sd) and thereafter emits time-delayed derived radiation to said detector means (110d).

13. A radiometer according to claim 1, characterized in that said guide means includes a chopper (80c, 80e) disposed to alternately preclude and permit the passage of radiation from said source (52c, 52e) simultaneously to said test element (Sc, Se) and to said reference means (126c, 126e).

14. A radiometer according to any one of the preceding claims, characterized in that said radiation source comprises a pulsed lamp (52-52e).

15. A radiometer according to any one of the preceding claims, characterized in that said radiation guide means includes means (72-72e) for splitting said illuminating radiation into first and second beams.

16. A radiometer according to any one of the preceding claims, characterized in that means (126-126e) is provided for attenuating the illuminating radiation detected from the reference means.

17. A radiometer according to any one of the preceding claims, characterized in that said detector means comprises a single detector (110-110e) disposed to receive radiation alternately from said test element (S-Se) and from said reference means (126-126e).

18. A radiometer according to any one of the preceding claims, characterized in that said reference means (126-126e) includes a composition capable of emitting radiation in response to absorption of said illuminating radiation.

19. A radiometer according to claim 18, characterized in that said emitted radiation is primarily fluorescence.

20. A radiometer according to claim 18, characterized in that said emitted radiation is primarily phosphorescence.

21. A method for normalizing measurements of radiation in a radiometer, said radiometer comprising a first target containing an analyte and a second target, the method comprising the steps of

substantially simultaneously illuminating said targets with radiation from a single source to generate derived radiation from one of said targets and time-delayed derived radiation from the other target;

sequentially detecting derived radiation from said one target and time-delayed derived radiation from the other target and producing signals representing respectively said derived radiations; and

adjusting the signal representing radiation detected from the first target by means of the signal representing radiation detected from the second target.

22. A method, as defined in claim 21, wherein said first target is a test element and said second target is a reference means.

23. A method, as defined in claim 22, wherein said time-delayed derived radiation is from said test element.

24. A method, as defined in claim 22, wherein said time-delayed derived radiation is from said reference means.

25. A method, as defined in claim 22, wherein the adjusting step is accomplished by dividing the signal representing radiation from said test element by the signal representing radiation from said reference means.

FIG. I

FIG. 2

FIG. 3

FIG. 4a

FIG. 4b

FIG. 5a

FIG. 5b

*FIG. 6*

*FIG. 7*

0081947

FIG. 8

FIG. 9

0081947

FIG. 10

7 / 9    0081947

FIG. II

0081947

FIG. 12

FIG. 13

0081947

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | G 01 N 21/64 |
| D,A | US-A-4 153 369 (E.A. KALLET et al.)<br><br>* Claim 1; abstract; column 2, line 34 - column 3, line 30; figure 1 * | 1,2,9, 10,15, 17-19, 21,22 | |
| | --- | | |
| P,A | REVIEW OF SCIENTIFIC INSTRUMENTS, vol. 53, no. 9, September 1982, R.W.WIJNAENDTS VAN RESANDT et al. "Double beam fluorescence lifetime spectrometer with subnanosecond resolution: application to aqueous tryptophan", pages 1392-1397<br>* Abstract; | 1,15, 17-19, 21-23 | |
| | --- | | TECHNICAL FIELDS SEARCHED (Int. Cl. 3) |
| A | DE-C-1 122 731 (AMERICAN INSTRUMENT CO. INC.)<br>* Claims 1, 2; column 2, lines 29-46; figure 1 * | 1,10, 21 | G 01 N 21/00 |
| | --- | | |
| A | DE-B-2 628 158 (ANALYTICAL RADIATION CORP.)<br>* Claim 1; column 4, lines 9-21; figures 1, 2a-c * | 1,21 | |
| | ---      -/- | | |

The present search report has been drawn up for all claims

| Place of search<br>BERLIN | Date of completion of the search<br>24-02-1983 | Examiner<br>HOFMANN D G |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent
Office

**EUROPEAN SEARCH REPORT**

| DOCUMENTS CONSIDERED TO BE RELEVANT | | | Page 2 | |
|---|---|---|---|---|
| Category | Citation of document with indication, where appropriate, of relevant passages | Relevant to claim | CLASSIFICATION OF THE APPLICATION (Int. Cl. 3) | |
| A | APPLIED OPTICS, vol. 20, no. 1, January 1981, New York, H.C. BASSO et al. "Chopper technique for measuring a delayed fluorescence spectrum superimposed on a excitation spectrum", pages 12-14 * Whole document * | 1,21 | | |
| | ----- | | | |
| | | | **TECHNICAL FIELDS SEARCHED (Int. Cl. 3)** | |
| | The present search report has been drawn up for all claims | | | |

| Place of search BERLIN | Date of completion of the search 24-02-1983 | Examiner HOFMANN D G |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82